# EUROPEAN PATENT APPLICATION

(11) **EP 2 747 517 A2**
(43) Date of publication of application: **25.06.2014**
(21) Application number: 13181446.9
(22) Date of filing: 23.08.2013
(51) Int. Cl.: H05B 33/08

(54) **Lighting apparatus and lighting system**

(30) Priority: 18.12.2012 JP 2012276003
(71) Applicant: Toshiba Lighting & Technology Corporation, Yokosuka-shi Kanagawa 237-8510 (JP)
(72) Inventor: Takahashi, Junko, Kanagawa 237-8510 (JP); Takahashi, Kenji, Kanagawa 237-8510 (JP); Kawano, Hitoshi, Kanagawa 237-8510 (JP); Kumashiro, Shinichi, Kanagawa 237-8510 (JP); Yamamoto, Hisashi, Kanagawa 237-8510 (JP)
(74) Representative: Bokinge, Ole

(57) **Abstract**

A lighting apparatus (L) includes: a light source section (20) that includes two or more kinds of plural LEDs (25) having different emission colors as light sources; a storage section (21) that stores light color characteristic information that indicates the relation between a light color of an illumination light that is generable by the light source section (20) and an output of each LED (25); a transmission section (22) through which a light color control command for designating the light color of the illumination light is input; and a control section (23) that converts the light color control command into output information of each LED (25) on the basis of the light color characteristic information, and controls an output level of each LED (25) on the basis of the output information.

## Description

### FIELD

Embodiments described herein relate generally to a lighting apparatus and a lighting system that are capable of changing a light color using plural kinds of light emitting devices having different emission colors.

### BACKGROUND

In the related art, a collective lighting system that generally and remotely controls plural lighting apparatuses provided in each use area such as a floor is widely employed in office buildings, various facilities or the like, for example. In such a lighting system, the plural lighting apparatuses are connected to a central controller to be able to communicate therewith through a transmission line. Further, each lighting apparatus is controlled by various control signals supplied from the central controller in a broadcast manner.

In recent years, a lighting apparatus that uses a light emitting device such as a light emitting diode (LED) as a light source is widely spread. According to this type of lighting apparatus, for example, as disclosed in JP-A-2012-129021, by using plural kinds of light emitting devices having different emission light colors (for example, two kinds of LEDs that emit a white light and an electric bulb color light) as a light source and by adjusting output of each light emitting device, it is possible to change a light color (mixed light color) of an illumination light output from the entire lighting apparatus.

However, in this type of lighting apparatus, since the number, light emission characteristics or the like of the light emitting devices used as the light source varies in general according to the kind (type, specification or the like) of the lighting apparatus, even when an illumination light having the same light color is generated, it is necessary to individually perform an output control for each kind of lighting apparatus. Thus, in a lighting system that employs this type of lighting apparatus, it may be difficult to obtain an illumination light having a desired light color by a uniform output control. In order to solve this problem, for example, it is necessary to employ the same kinds of lighting apparatuses, or to perform individual output adjustment for various kinds of lighting apparatuses.

### BRIEF DESCRIPTION OF THE DRAWINGS

FIG. 1 is a diagram illustrating a configuration of a lighting system;
FIG. 2 is a diagram illustrating an example of a data structure of a control signal transmitted to a lighting apparatus;
FIG. 3 is a diagram illustrating an example of a data structure of a control signal transmitted to a relay;
FIG. 4 is a chromaticity diagram;
FIG. 5A is a diagram illustrating an example of a table for calculating output of a light emitting diode from coordinates on the chromaticity diagram;
FIG. 5B is a diagram illustrating an example of the table for calculating output of the light emitting diode from coordinates on the chromaticity diagram;
FIG. 5C is a diagram illustrating an example of the table for calculating output of the light emitting diode from coordinates on the chromaticity diagram;
FIG. 5D is a diagram illustrating an example of the table for calculating output of the light emitting diode from coordinates on the chromaticity diagram;
FIG. 6 is a flowchart (1) illustrating a setting control routine of a dimming level;
FIG. 7 is a flowchart (2) illustrating the setting control routine of the dimming level;
FIG. 8 is a diagram illustrating calculation of a dimming ratio;
FIG. 9 is a flowchart illustrating a fade control routine of the dimming level;
FIG. 10 is a diagram illustrating an example of a table of a dimming level variation width;
FIG. 11 is a diagram illustrating an example of a fade control during switching transition of the dimming level;
FIG. 12 is a diagram illustrating a configuration of a modification example of the lighting apparatus; and
FIG. 13 is a diagram illustrating a configuration of a modification example of the lighting apparatus.

### DETAILED DESCRIPTION

In general, according to the embodiment, a lighting apparatus includes: a light source section that includes two or more kinds of plural light emitting devices having different emission colors as light sources; a storage section that stores light color characteristic information that indicates a relation between a light color of an illumination light that is generable by the light source section and an output of each of the light emitting devices; an input section through which light color designation information for designating the light color of the illumination light is input; and a control section that converts the light color designation information into output information of each of the light emitting devices on the basis of the light color characteristic information and controls an output level of each of the light emitting devices on the basis of the output information.

Further, a lighting system according to another exemplary embodiment includes: the lighting apparatus in plurality; and a central controller that is connected to each of the lighting apparatuses to be able to communicate therewith and outputs the light color designation information to each of the lighting apparatuses.

In respective exemplary embodiments relating to the present description and appended claims, definitions and technical meanings of terminologies are as follows unless they are particularly used to have limiting definitions and meanings.

A light emitting device may preferably employ a light emitting diode (LED), but is not limited thereto. For example, the light emitting device may be a light emitting body such as an organic EL.

An input section may employ various interfaces, which may be wired or wireless.

Light color designation information may preferably employ x-y coordinates on a chromaticity diagram or a color temperature, but is not limited thereto. It is sufficient if the light color designation information is a parameter through which a light color of an illumination light that is generated in a light emitting section is designated.

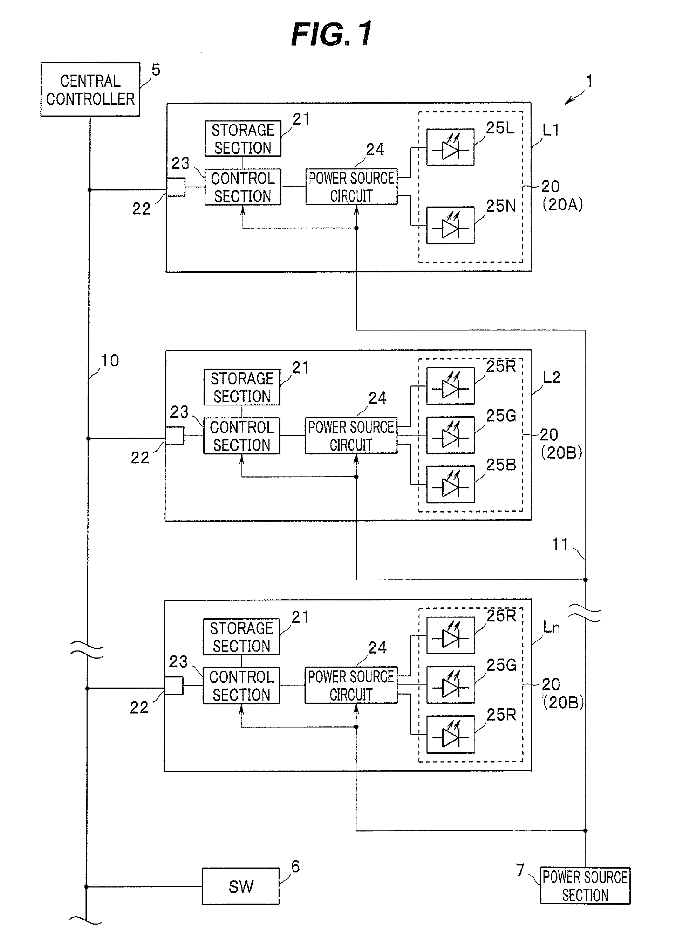

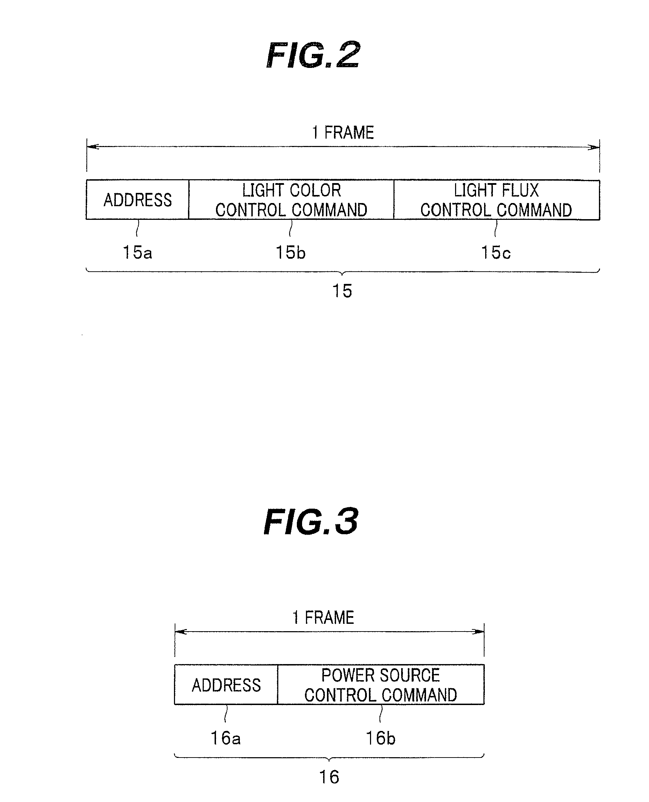

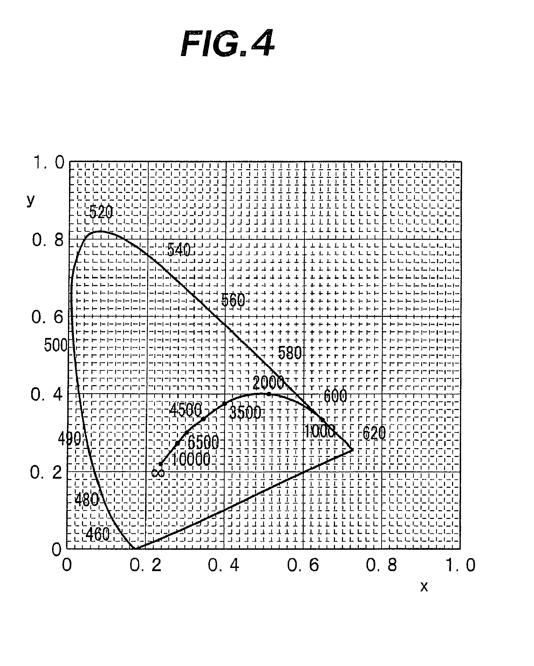

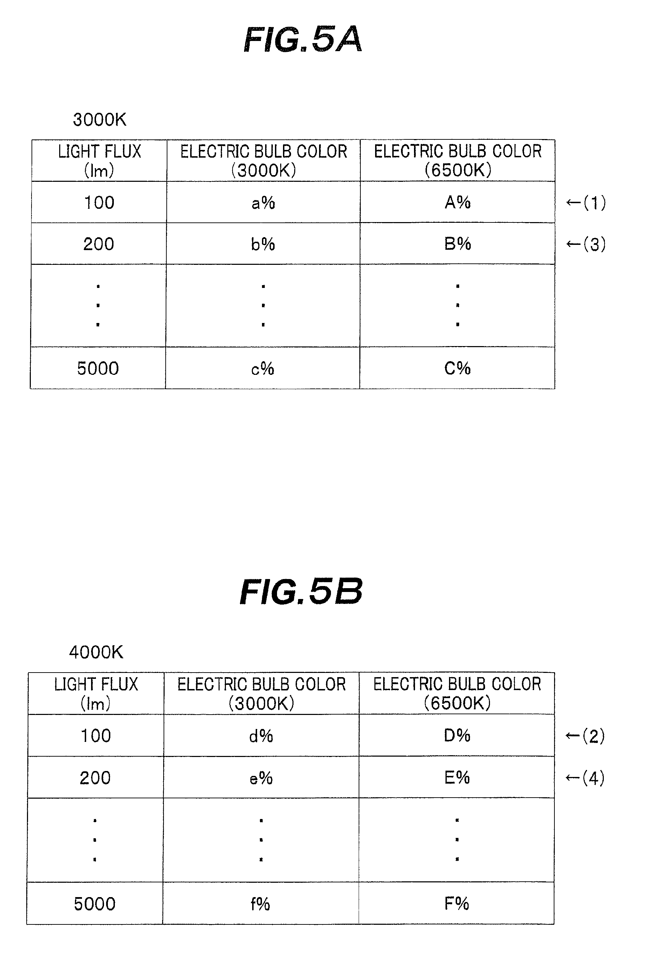

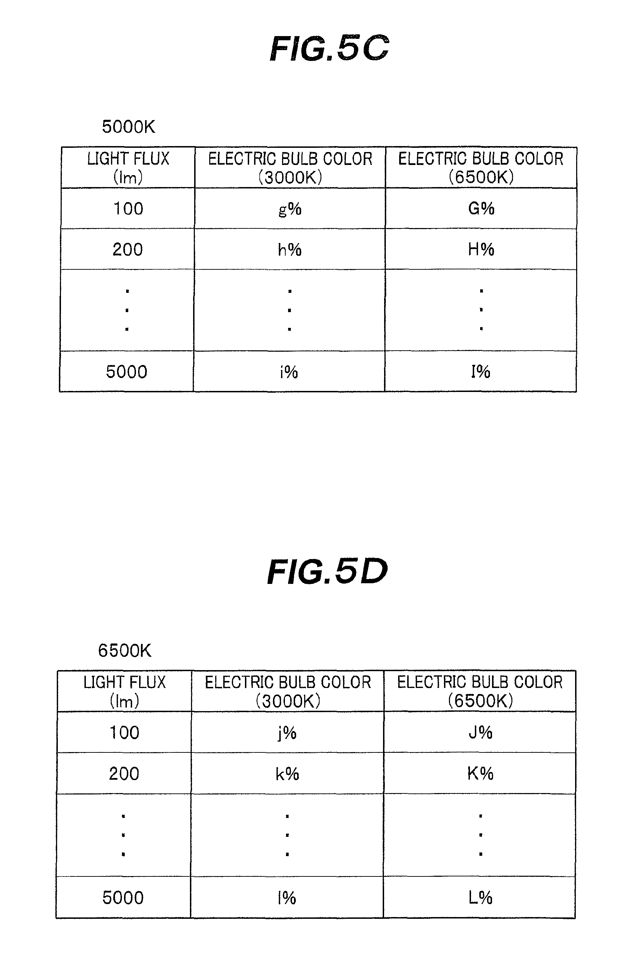

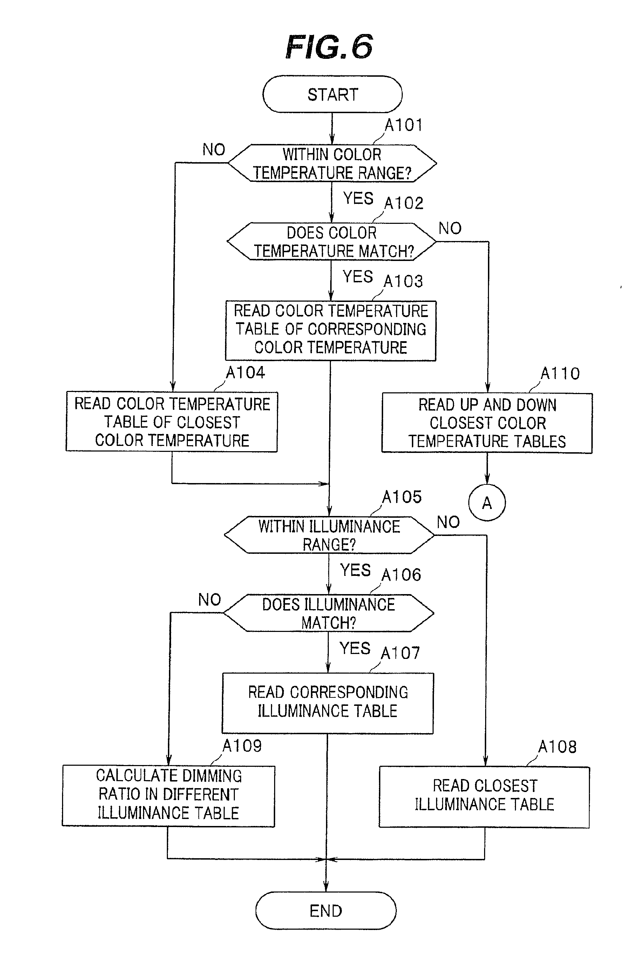

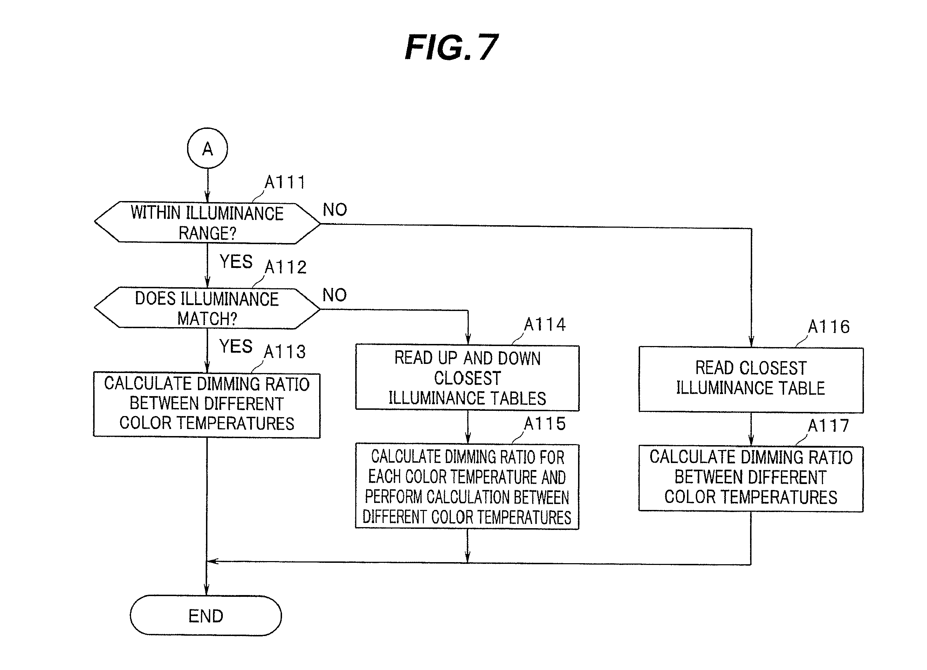

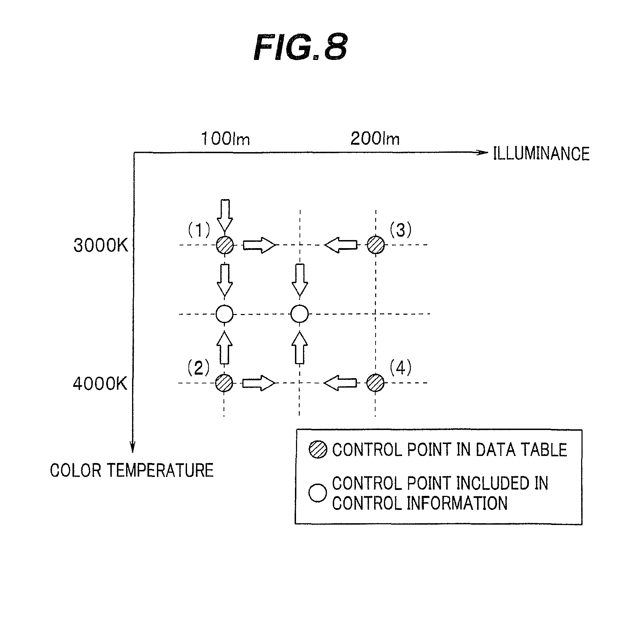

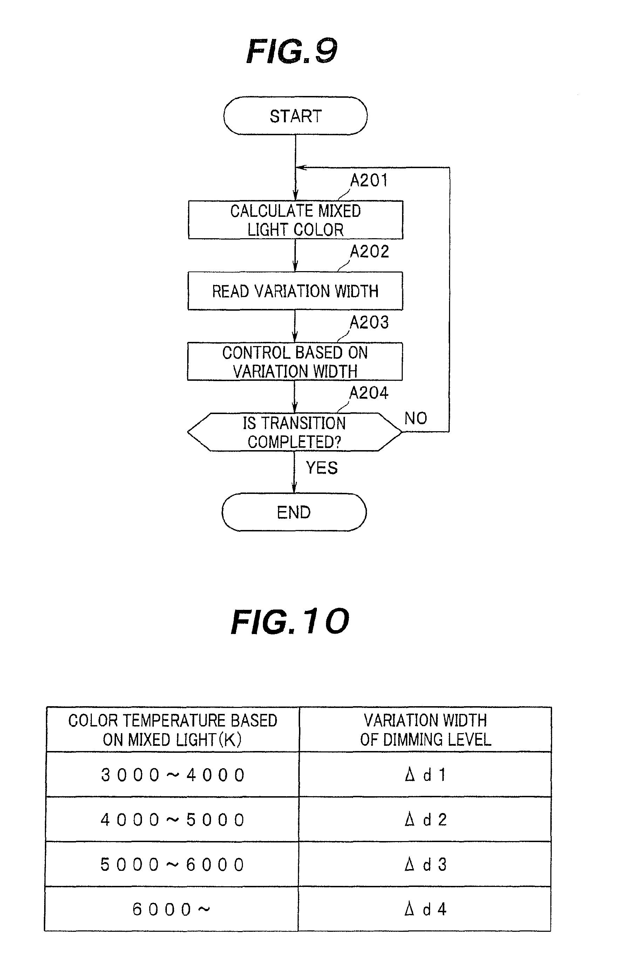

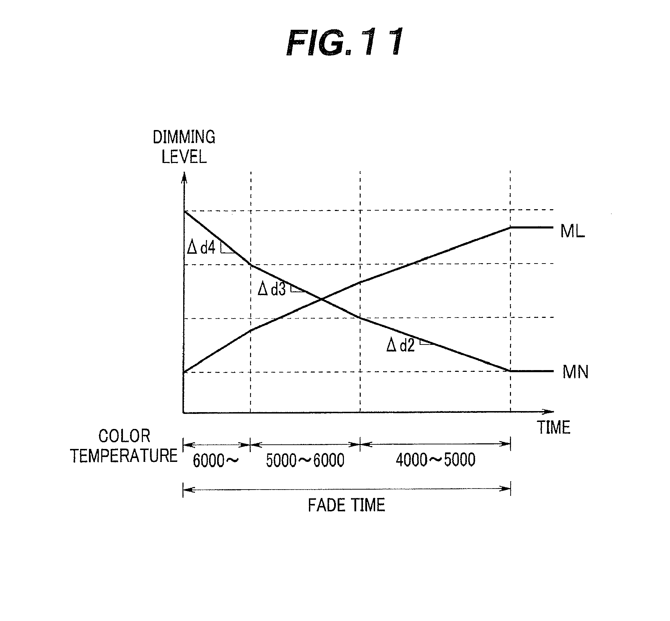

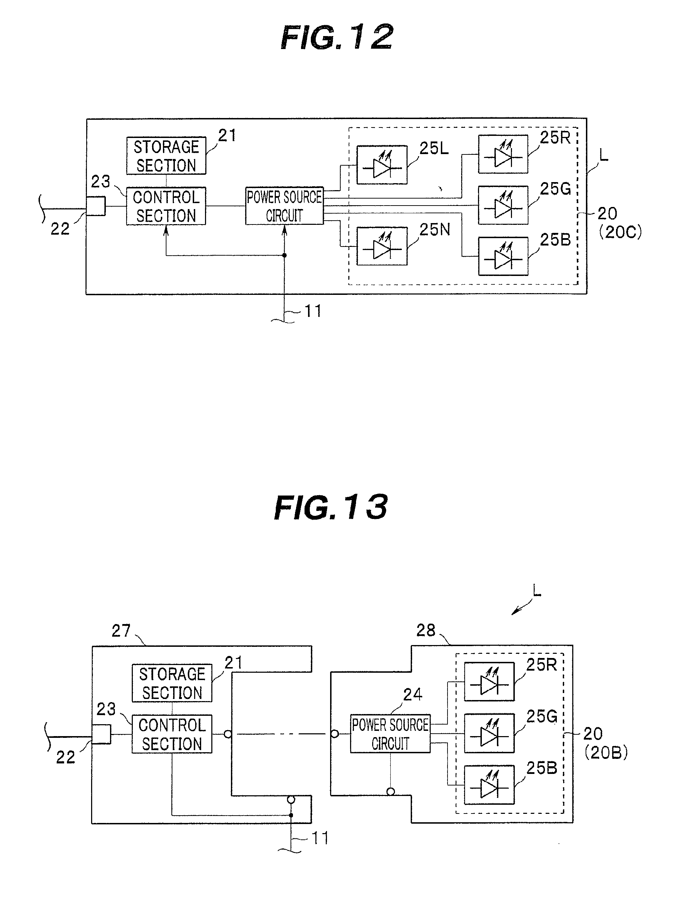

Hereinafter, exemplary embodiments will be described referring to the accompanying drawings. The drawings relate to an exemplary embodiment, in which FIG. 1 is a diagram illustrating a configuration of a lighting system; FIG. 2 is a diagram illustrating an example of a data structure of a control signal transmitted to a lighting apparatus; FIG. 3 is a diagram illustrating an example of a data structure of a control signal transmitted to a relay; FIG. 4 is a chromaticity diagram; FIGS. 5A to 5D are diagrams illustrating examples of a table for calculating output ratio of a light emitting diode from coordinates on the chromaticity diagram; FIGS. 6 and 7 are flowcharts illustrating a setting control routine of a dimming level; FIG. 8 is a diagram illustrating calculation of a dimming ratio; FIG. 9 is a flowchart illustrating a fade control routine of the dimming level; FIG. 10 is a diagram illustrating an example of a table of a dimming level variation width; FIG. 11 is a diagram illustrating an example of a fade control during switching transition of the dimming level; FIGS. 12 and 13 are diagrams illustrating configurations of modification examples of a lighting apparatus.

A lighting system 1 shown in FIG. 1 is preferably used in office buildings, various facilities or the like. The lighting system 1 includes a central controller 5 that generally controls the entire system, a switch 6 provided on a wall or the like of a building, a plurality of lighting apparatuses L1, L2, ..., Ln that uses an LED as a light source, and a power source section 7 that supplies power to the respective lighting apparatuses L1, L2, ..., Ln. Here, in the lighting system 1 of the present embodiment, unique addresses # are allocated to the respective lighting apparatuses L1, L2, ..., Ln, and are connected to the central controller 5 together with, for example, the switch 6 through a signal transmission line 10. Further, the respective lighting apparatuses L1, L2, ..., Ln are connected to the power source section 7 through a power supply line 11. In the following description, the lighting apparatuses L1, L2, ..., Ln are arbitrarily referred to as a lighting apparatus L.

The central controller 5 includes a CPU, a RAM, a ROM and the like (not shown). For example, the central controller 5 may receive an operation signal to the switch 6 through the signal transmission line 10, and may transmit control data based on the operation signal to the lighting apparatus L through the signal transmission line 10.

Specifically, the switch 6 includes a dimming operation section (not shown) for designating the color, flux or the like of light of the lighting apparatus L of each address #, and an ON/OFF operation section (not shown) for performing ON/OFF switching of the lighting apparatus L of each address #, and the like. Further, if an operation signal with respect to each operation section of the switch 6 is input through the signal transmission line 10, the central controller 5 generates a transmission frame based on the operation signal.

For example, if an operation input with respect to the dimming operation section of the switch 6 is performed, the central controller 5 generates a transmission frame 15 for transmitting control data to the lighting system L. The transmission frame 15 has a format in which address data 15a of the lighting apparatus, a light color control command 15b that is light color designation information for designating the light color of the illumination light and a light flux control command 15c that is light flux designation information for designating the light flux of the illumination light are sequentially arranged, as shown in FIG. 2, for example. Here, as the light color control command 15b in the present embodiment, for example, a color temperature on a chromaticity diagram (see FIG. 4) is set. Further, x-y coordinates on the chromaticity diagram may be set as the light color control command 15b, instead of the color temperature, for example. The color temperature will be described later as a correlated color temperature.

Further, for example, if an operation input with respect to the ON/OFF operation section of the switch 6 is performed, the central controller 5 generates a transmission frame 16 for transmitting control data for an ON/OFF control of power supplied to a power source circuit, that is, power consumed by a power source circuit section and a light source section 20. The transmission frame 16 has a format in which address data 16a of the lighting apparatus L and a power source control command 16b for designating an ON/OFF state are sequentially arranged, shown in FIG. 3, for example.

Further, the central controller 5 transmits the generated transmission frame 15 (or the transmission frame 16) to the lighting apparatus L through the signal transmission line 10.

As shown in FIG. 1, the lighting apparatus L includes the light source section 20, a storage section 21, a transmission section 22, a control section 23, and a power source circuit 24. A relay (not shown) is built in the power source circuit 24. If the control section 23 receives the transmission frame 16 for the ON/OFF control, the control section 23 performs an ON/OFF control of the relay. Thus, when the lighting apparatus L is controlled in a state of being turned off, it is possible to cut off standby power consumed in the power source circuit 24.

The light source section 20 includes two or more kinds of plural LEDs 25 having different emission colors as light sources. In each lighting apparatus L of the present embodiment, any one selected from light source sections having two or more kinds of different specifications is employed as the light source section 20, for example.

Among the light source sections, one light source section 20 (hereinafter, referred to as a first light source section 20A) includes an LED 25L that emits an electric bulb color light of which the correlated color temperature is around 3000 K, and an LED 25N that emits a daytime color light of which the correlated color temperature is about 6500 K, as light sources, for example. As respective output levels of the LED 25L and the LED 25N are controlled to be variable in a dimming control to be described later, the first light source section 20A may generate an illumination light of an arbitrary mixed light color on a line that connects the correlated color temperature of the electric bulb color and the correlated color temperature of the daytime light color.

Further, another light source section 20 (hereinafter, referred to as a second light source section 20B) includes an LED 25R that emits a red light, an LED 25G that emits a green light, and an LED 25B that emits a blue light, as light sources, for example. As respective output levels of the LED 25R, the LED 25G and the LED 25B are controlled to be variable in the dimming control to be described later, the second light source section 20B may generate an illumination light of an approximately arbitrary mixed light color on a chromaticity diagram.

In the lighting system 1 of the present embodiment shown in FIG. 1, for example, the first light source section 20A is employed in the lighting apparatus L1 and the like, and the second light source section 20B is employed in the lighting apparatuses L2, Ln and the like.

The storage section 21 includes a RAM or the like, for example, and stores various control information or the like of the lighting system L. In the present embodiment, the storage section 21 stores address information allocated to the lighting apparatus L, light color characteristic information that indicates the relation between a light color of an illumination light that is generable by the light source section 20 and an output of each LED 25, and the like, in addition to various control programs or the like executed by the control section 23. In this case, for example, as shown in FIGS. 5A to 5D, the storage section 21 of the lighting apparatus L (lighting apparatus L1 or the like) provided with the first light source section 20A stores, as the light color characteristic information, information obtained by tabling the relation between each light color (for example, designated by the correlated color temperature) of the illumination light that is generable in the first light source section 20A and each dimming ratio (output) for each light flux of the respective LEDs 25L and 25N for realizing each light color. Although not shown, for example, the storage section 21 of the lighting apparatus L (lighting apparatus L2, Ln or the like) provided with the second light source section 20B similarly stores information, as the light color characteristic information, information obtained by tabling the relation between each light color (for example, designated by the correlated color temperature) of the illumination light that is generable in the second light source section 20B and each dimming ratio (output) for each light flux of the respective LEDs 25R, 25G and 25B for realizing each light color.

The transmission section 22 is a transmission interface that is connected to the signal transmission line 10 to perform data communication, and has a function as an input section through which various control information or the like of the transmission frames 15 and 16 generated in the central controller 5 is to be input.

The control section 23 performs various controls according to a program or the like that is stored in advance in the storage section 21, for example. As one of the controls, the control section 23 performs the ON/OFF control (ON/OFF control of the light source section 20) of the relay built in the power source circuit 24 on the basis of the power source control command transmitted from the central controller 5. Further, the control section 23 performs an output level control of each LED 25 on the basis of the light color control command and the light flux control command transmitted from the central controller 5. That is, the control section 23 converts the light color control command into output information about each LED 25 on the basis of the table stored in the storage section 21, for example. More specifically, the control section 23 calculates output information about each LED 25 necessary for obtaining desired correlated color temperature and light flux on the basis of the light color control command and the light flux control command. Further, the control section 23 generates a dimming level signal of each LED 25 on the basis of each piece of output information, and controls a drive voltage applied to each LED 25 from the power source section 7 through the control for the power source circuit 24 based on the dimming level signal, to thereby control an output level of each LED 25.

Next, a setting control of the dimming level executed in the control section 23 will be described referring to a flowchart of a dimming level setting control routine shown in FIG. 6. The following dimming level setting control will be described as an example executed in the control section 23 of the lighting apparatus L provided with the light source section 20A, for example.

This routine is executed whenever a new transmission frame 15 of the corresponding address is input through the transmission section 22, for example. If the routine starts, the control section 23 determines in Act 101 whether the correlated color temperature designated by the light color control command is within a correlated color temperature range that is generable in the light source section 20A. That is, the control section 23 determines whether the correlated color temperature designated by the light color control command is present between the minimum value 3000 K and the maximum value 6500 K of the correlated color temperature that are generable by the respective LEDs 25L and 25N, for example.

Further, if it is determined in Act 101 that the correlated color temperature designated by the light color control command is within the correlated color temperature range that is generable in the light source section 20A, the control section 23 causes the routine to proceed to Act 102, and checks whether a correlated color temperature table that matches with the correlated color temperature designated by the light color control command is present.

If it is determined in Act 102 that the correlated color temperature table that matches with the correlated color temperature designated by the light color control command is present, the control section 23 causes the routine to proceed to Act 103, and reads the table of the corresponding correlated color temperature. Then, the routine proceeds to Act 105.

On the other hand, if it is determined in Act 101 that the correlated color temperature designated by the light color control command is not present in the correlated color temperature range that is generable in the light source section 20A, the control section 23 causes the routine to proceed to Act 104, and reads a table of a correlated color temperature that is closest to the correlated color temperature designated by the light color control command. Then, the routine proceeds to Act 105. That is, the control section 23 reads a correlated color temperature table (see FIG. 5A) of the minimum value 3000 K or a correlated color temperature table (see FIG. 5D) of the maximum value 6500 K, as the correlated color temperature table corresponding to the correlated color temperature designated by the light color control command.

Further, if it is determined in Act 102 that the correlated color temperature table that matches with the correlated color temperature designated by the light color control command is not present, the control section 23 causes the routine to proceed to Act 110, and reads up and down correlated color temperature tables that are closest to the correlated color temperature designated by the light color control command. Then, the routine proceeds to Act 111. That is, when the correlated color temperature designated by the light color control command is 3500 K, the control section 23 reads the correlated color temperature table of 3000 K and the correlated color temperature table of 4000 K, for example.

If the routine proceeds to Act 105 from Act 103 or Act 104, the control section 23 checks whether the light flux designated by the light flux control command is within a light flux range set in the correlated color temperature table (for example, within the range of 100 Im to 5000 Im).

Further, if it is determined in Act 105 that the light flux designated by the light flux control command is within the light flux range set in the correlated color temperature table, the control section 23 causes the routine to proceed to Act 106, and checks whether light flux that matches with the light flux designated by the light flux control command is present on the correlated color temperature table read in Act 103 or Act 104.

If it is determined in Act 106 that the light flux table having the matching light flux is present, the control section 23 causes the routine to proceed to Act 107, and reads the corresponding light flux table on the correlated color temperature table and sets each dimming ratio set in the corresponding table as new control information. Then, the routine ends.

On the other hand, if it is determined in Act 105 that the light flux designated by the light flux control command is out of the light flux range set in the correlated color temperature table, the control section 23 causes the routine to proceed to Act 108, and reads the closest light flux table on the correlated color temperature table (for example, a table of a light flux of 100 Im or 5000 Im) and sets each dimming ratio set in the corresponding table as new control information. Then, the routine ends.

Further, if it is determined in Act 106 that the light flux table having the matching light flux is not present, the control section 23 causes the routine to proceed to Act 109, and reads up and down light flux tables that are closest to the light flux designated by the light flux control command and calculates a new dimming ratio as control information on the basis of the dimming ratio set in each light flux table. Then, the routine ends.

For example, if the correlated color temperature table of 3000 K is currently read and the light flux designated by the light flux control command is 150 Im, a dimming ratio of the electric bulb color LED 25L is calculated as (a+b)×150/(100+200)%; and a dimming ratio of the daytime light color LED 25N is calculated as (A+B)×150/(100+200)% from the relation of (1) and (3) shown in FIGS. 5A and 8.

Further, if the routine proceeds to Act 111 from Act 110, the control section 23 checks whether the light flux designated by the light flux control command is within the light flux range set in the correlated color temperature table (for example, within the range of 100 Im to 5000 Im).

Further, if it is determined in Act 111 that the light flux designated by the light flux control command is within the light flux range set in the correlated color temperature table, the control section 23 causes the routine to proceed to Act 112, and checks whether the light flux that matches with the light flux designated by the light flux control command is present on each correlated color temperature table read in Act 110.

If it is determined in Act 112 that the light flux table having the matching light flux, the control section 23 causes the routine to proceed to Act 113, and calculates a new dimming ratio as control information on the basis of each dimming ratio between different correlated color temperatures. Then, the routine ends.

For example, if the correlated color temperature currently designated by the light color control command is 3500 K, the correlated color temperature table of 3000 K and the correlated color temperature table of 4000 K are read, and the light flux designated by the light flux control command is 100 Im, a dimming ratio of the electric bulb color LED 25L is calculated as (a+d)×3500/(3000+4000)% and a dimming ratio of the daytime light color LED 25N is calculated as (A+D)×3500/(3000+4000)% from the relation of (1) and (2) shown in FIGS. 5A, 5B and FIG. 8.

On the other hand, if it is determined in Act 112 that the light flux table having the matching light flux is not present, the control section 23 causes the routine to proceed to Act 114, and reads the up and down light flux tables that are closest to the light flux designated by the light flux control command. Then, the routine proceeds to Act 115 on each correlated color temperature table.

Further, in Act 115, the control section 23 calculates a dimming ratio for each correlated color temperature, and calculates a new dimming ratio between different correlated color temperatures as control information. Then, the routine ends.

For example, if the correlated color temperature currently designated by the light color control command is 3500 K, the correlated color temperature table of 3000 K and the correlated color temperature table of 4000 K are read, and the light flux designated by the light flux control command is 150 Im, respective dimming ratios are calculated from the relation of (1) to (4) shown in FIGS. 5A, 5B and FIG. 8. That is, a dimming ratio of the electric bulb color LED 25L is calculated as (a+b)×150/(100+200)=V%; and a dimming ratio of the daytime light color LED 25N is calculated as (A+B)×150/(100+200)=X% from tables (1) and (3). Further, a dimming ratio of the electric bulb color LED 25L is calculated as (d+e)×150/(100+200)=Y%; and a dimming ratio of the daytime light color LED 25N is calculated as (D+E)×150/(100+200)=Z% from tables (2) and (4). Further, a final dimming ratio of the electric bulb color LED 25L is calculated as (V+Y)×3500/(3000+4000)%; and a final dimming ratio of the daytime light color LED 25N is calculated as (X+Z)×3500/(3000+4000)%.

Further, if it is determined in Act 111 that the light flux designated by the light flux control command is out of the light flux range set in the correlated color temperature table, the control section 23 causes the routine to proceed to Act 116, and reads the closest light flux table on each correlated color temperature table. Then, the routine proceeds to Act 117.

Further, in Act 117, a new dimming ratio is calculated as control information on the basis of each dimming ratio between different correlated color temperatures, and then, the routine ends.

For example, if the correlated color temperature currently designated by the light color control command is 3500 K, the correlated color temperature table of 3000 K and the correlated color temperature table of 4000 K are read, and the light flux designated by the light flux control command is 100 Im, a dimming ratio of the electric bulb color LED 25L is calculated as (a+d)×3500/(3000+4000)%; and a dimming ratio of the daytime light color LED 25N is calculated as (A+D)×3500/(3000+4000)% from the relation of (1) and (2) shown in FIGS. 5A, 5B and FIG. 8.

If the dimming ratios of the respective LEDs 25L and 25N are calculated as new control information in this way, the control section 23 transits the current dimming level to a new dimming level by a fade control. The transition is performed according to a fade control routine of the dimming level shown in FIG. 9, for example. If the routine starts, the control section 23 first calculates a correlated color temperature of a mixed light color generated by the respective LED 25L and 25N on the basis of the dimming ratio that is being currently controlled, in ACT 201.

Subsequently, in Act 202, the control section 23 reads a preset table or the like. That is, for example, as shown in FIG. 10, a preset table that indicates the relation between a correlated color temperature due to light mixture and a dimming level variation width Δd is stored in the storage section 21, and the control section 23 sets the dimming level variation width Δd based on the correlated color temperature of the mixed light color referring to the table.

Further, in Act 203, the control section 23 performs the fade control using the dimming level variation width Δd set in Act 202.

Subsequently, in Act 204, the control section 23 checks whether the transition of the diming level is completed by checking whether the current dimming level reaches a dimming level based on new control information. If it is determined that the transition is not completed, the control section 23 returns the routine to Act 201.

On the other hand, if it is determined in Act 204 that the transition to the new dimming level is completed, the control section 23 ends the routine.

With such a control, for example, as shown in FIG. 11, the dimming level is fade-controlled in variation based on the correlated color temperature without uncomfortable feeling. Here, the above-described fade control may use the light flux instead of the correlated color temperature as a control parameter, for example. Further, the fade control may be performed by a known filtering process based on sine waves, or the like, instead of the above-described process. Further, the frequency of controls may be changed according to the correlated color temperature to be controlled. Here, the frequency of controls refers to the frequency of output changes of the light source section. For example, compared with a case where the dimming ratio is changed every 5%, if the dimming ratio is changed every 1%, the frequency of controls increases. In this manner, by increasing the frequency of controls in the case of a correlated color temperature at which the color change is easily sensed and decreasing the frequency of controls in the case of a correlated color temperature at which the color change is barely sensed, it is possible to make the light color change be barely sensible. Further, a case where the dimming level variation width is stored according to the width of the correlated color temperature is described, but the embodiment is not limited thereto. For example, a table may be stored as a function of the variation width with respect to the correlated color temperature to be repeatedly read.

According to such an embodiment, by forming the lighting apparatus L including the light source section 20 that includes two or more kinds of plural LEDs 25 having different emission colors, the storage section 21 that stores the light color characteristic information that indicates the relation between the light color of the illumination light that is generable by the light source section 20 and the output of each LED 25, the transmission section 22 through which the light color control command for designating the light color of the illumination light is input, and the control section 23 that converts the light color control command into the output information of each LED 25 on the basis of the light color characteristic information and controls the output level of each LED 25 on the basis of the output information, it is possible to easily generate an illumination light having a desired light color with a high general-purpose characteristic. That is, for example, even though the lighting system 1 is configured by combination of the plural lighting apparatuses L in which specifications of the light source sections 20 are different from each other, it is possible to perform a dimming control or the like by uniform control information (control command).

Here, in the above-described embodiment, the light source section 20A that uses two kinds of LEDs 25L and 25N and the light source section 20B that uses three kinds of LEDs 25R, 25G and 25B are illustrated as the light source sections 20 of the lighting apparatuses L, the specifications of the light source sections 20 are not limited thereto. For example, a light source section that uses four or more kinds of LEDs as light sources may be used. In this case, for example, as shown in FIG. 12, by forming a light source section 20C by combination of the LEDs 25L and 25N corresponding to light colors on a black body radiation track and the LEDs 25R, 25G and 25B corresponding to respective colors of R, G and B, it is possible to efficiently generate an illumination light of a wide range. That is, in a lighting apparatus L that includes the light source section 20C, for example, by basically performing a dimming control with reference to the LEDs 25L and 25N having good light emission efficiency, and by supplementing an insufficient light color by the LEDs 25R, 25G and 25B, it is possible to efficiently generate an illumination light of a wide range.

Further, as shown in FIG. 13, the lighting apparatus L may be configured to be separated into a socket 27 and a lighting apparatus main body 28, for example. As the lighting apparatus L is configured to be separated in this manner, for example, if a table stored in the storage section 21 is configured to be rewritable according to the lighting apparatus main body 28 mounted to the socket 27, it is possible to realize a high general-purpose lighting apparatus L.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A lighting apparatus comprising:
a light source section (20A, 20B, 20C) that includes two or more kinds of a plurality of light emitting devices (25L, 25N, 25R, 25G, 25B) having different emission colors as light sources:
a storage section (21) that stores light color characteristic information that indicates a relation between a light color of an illumination light that is generable by the light source section (20A, 20B, 20C) and an output of each of the light emitting devices (25L, 25N, 25R, 25G, 25B);
an input section (22) through which light color designation information for designating the light color of the illumination light is input; and
a control section (23) that converts the light color designation information into output information of each of the light emitting devices (25L, 25N, 25R, 25G, 25B) on the basis of the light color characteristic information, and controls an output level of each of the light emitting devices on the basis of the output information.

2. The apparatus according to claim 1,
wherein light flux designation information for designating light flux of the illumination light is input through the input section (22), and
the control section (23) calculates the output information on the basis of the light color designation information and the light flux designation information.

3. The apparatus according to claim 1 or 2,
wherein the control section (23) selects, when the illumination light having the light color designated on the basis of the light color designation information is not generable in the light source section (20A, 20B, 20C), a light color that is closest to the designated light color from among light colors that are generable in the light source section (20A, 20B, 20C), and converts the selected light color into the output information.

4. The apparatus according to any one of claims 1 to 3,
wherein the light color designation information is coordinates on a chromaticity diagram or a correlated color temperature.

5. The apparatus according to any one of claims 1 to 4,
wherein the control section (23) performs, when the light color designation information is changed, a fade control of gradually changing a current output level for the output level based on new output information.

6. A lighting system comprising:
the lighting apparatus (L) according to any one of claims 1 to 5 in plurality; and
a central controller (5) that is connected to each of the lighting apparatuses (L) to be able to communicate therewith, and outputs the light color designation information to each of the lighting apparatuses (L).
